# DEMANDE DE BREVET EUROPEEN

(11) **EP 2 091 016 A1**
(43) Date de publication de la demande: **19.08.2009**
(21) Numéro de dépôt: 08290142.2
(22) Date de dépôt: 14.02.2008
(51) Int. Cl.: G06Q 30/00

(54) **Procédé de recueil d'informations relatives à un internaute connecté à un site distant**

(71) Demandeur: Innovatron (Société Anonyme), 75006 Paris (FR)
(72) Inventeur: Moreno, Roland, 75005 Paris (FR)
(74) Mandataire: Dupuis-Latour, Dominique

(57) **Abrégé**

L'internaute est connecté à un site distant au moyen d'un terminal relié à ce site par des moyens bidirectionnels de télétransmission de données/

Le procédé consiste à :
a) afficher sur le terminal une page présentant à l'internaute un tableau (10) de 2 x N champs, avec N champs de saisie (30, 32, 34 ...) disposés en regard de N champs informatifs (20, 22, 24 ...),
les N champs de saisie étant fonctionnellement identiques, de sorte que l'entrée d'une donnée puisse être effectuée par l'internaute en renseignant indifféremment l'un quelconque des N champs de saisie,
et les N champs informatifs étant des champs préremplis par N informations qualifiantes respectives définies par le site, ces N informations qualifiantes étant différentes et n'étant pas corrélées aux données à entrer dans les champs de saisie,
b) inviter l'internaute à entrer une donnée en renseignant l'un quelconque des N champs de saisie, librement choisi par l'internaute,
c) identifier celui des N champs de saisie renseigné par l'internaute à l'étape b), et
d) faire remonter au site distant, par télétransmission, à la fois la donnée (42) entrée par l'internaute et un indicateur (44) représentatif de l'information qualifiante contenue dans le champ informatif face auquel l'internaute a saisi cette donnée.

## Description

L'invention concerne un procédé de recueil d'informations relatives à un internaute connecté à un site web distant.

Dans son utilisation "world wide web", le réseau Internet peut être essentiellement conçu comme un maillage descendant, reliant les sites web à une large population d'internautes susceptibles de se connecter à ces sites.

Par ailleurs, l'interrogation d'un site web est, dans son aspect le plus simple ou au moins dans sa phase initiale, une procédure essentiellement anonyme et dissymétrique.

Si l'on prend l'exemple d'un moteur de recherche, un internaute (à qui le site ne demande pas de s'identifier) soumet au site une requête constituée d'une combinaison de quelques mots ou même d'un simple mot, et reçoit en retour une réponse extrêmement riche et détaillée : quantification du nombre de réponses disponibles, liste de pages web avec citation des extraits pertinents de celles-ci, hyperliens divers, etc.

Du point de vue de la théorie de l'information, cet échange est déséquilibré, dans la mesure où le moteur de recherche donne beaucoup et ne reçoit rien, ou presque rien, de l'internaute en contrepartie.

Le moteur de recherche peut certes analyser le mot ou les mots de la requête pour proposer par exemple des liens commerciaux ciblés. Cette technique est cependant assez peu efficace, car le contenu de la requête, en lui-même très sommaire, ne donne aucune indication véritablement personnelle sur l'internaute. Le moteur de recherche est d'ailleurs à cet égard incapable de distinguer entre une requête formulée par un internaute et une requête formée par un robot.

Ainsi, sauf à demander à l'internaute de s'identifier nommément (par une procédure classique mais contraignante), les seules informations connues d'un site Internet lors d'une consultation ou d'une transaction anonymes sont : (i) le contenu de la requête de l'internaute, et (ii) son adresse IP, qui ne fournit pas d'autre repère qu'une localisation géographique approximative.

En tout état de cause, ces informations ne donnent aucun renseignement de nature subjective sur l'internaute tel que ses préférences, ses centres d'intérêt, l'intention qui le motive lorsqu'il interroge le site, etc.

La technique, évoquée plus haut, consistant à analyser le contenu de la requête peut certes fournir quelques informations sur l'internaute, mais d'une manière qui est rarement satisfaisante.

En effet, si l'on prend l'exemple donné plus haut d'un moteur de recherche, la requête est trop succincte pour donner des informations réellement pertinentes. Dans un autre exemple d'un site Internet proposant un service de messagerie, les données produites par l'internaute sont plus abondantes et pertinentes, et il est alors possible d'analyser la teneur des messages rédigés par l'internaute pour en extrapoler des informations de nature personnelle. Mais cette technique d'analyse requiert des moyens de calcul relativement importants au niveau du site, ainsi que suffisamment de contenu à analyser et interpréter. Et si ce contenu est constitué essentiellement de chiffres, la technique ne procure aucune information intéressante.

Une autre technique encore consiste à demander à l'internaute de répondre à un questionnaire sur ses goûts, son âge, sa catégorie socioprofessionnelle, etc. Mais, concrètement, le fait de proposer un tel questionnaire engendre pratiquement toujours une réaction négative chez les internautes, qui à juste titre estiment que ce questionnaire est une perte de temps et ne leur procure aucun avantage, même si le questionnaire est présenté "pour améliorer le service offert par le site". Un tel questionnaire peut constituer pour certaines personnes un obstacle rédhibitoire, de sorte que l'internaute se détourne du site ou, s'il veut accéder quand même au site, il répond n'importe quoi aux questions qui lui sont posées, de manière à (croît-il) gagner du temps. Dans tous les cas, le questionnaire n'a pas rempli son rôle, bien au contraire son impact a été négatif.

L'un des buts de l'invention est de s'affranchir des inconvénients ci-dessus, en proposant un procédé permettant d'organiser, dans le cadre du maillage Internet entre sites et internautes, un circuit de retour d'informations depuis l'internaute vers le site, c'est-à-dire un circuit "remontant" permettant au site d'obtenir des informations de nature subjective sur l'internaute, c'est-à-dire des indicateurs représentatifs de traits de la personnalité de l'internaute.

Le but de l'invention est d'aboutir à ce résultat :
- du côté du terminal, sans demander à l'internaute aucune autre action que celle normalement requise par la consultation du site ou l'exécution de la transaction avec ce site, et
- du côté du site, sans recourir à aucune analyse de contenu de données transmise de l'internaute au site.

Concernant ce dernier aspect, l'un des buts de l'invention est de proposer un procédé qui soit applicable notamment à des situations où le contenu de l'information ne donnerait en lui-même aucune indication sur la personnalité ou les centres d'intérêt de l'internaute, par exemple une donnée uniquement constituée de chiffres.

L'invention propose à cet effet un procédé de recueil d'informations relatives à un internaute connecté à un site distant au moyen d'un terminal relié à ce site par des moyens bidirectionnels de télétransmission de données, caractérisé par les étapes successives suivantes :
a) afficher sur le terminal une page présentant à l'internaute un tableau de 2 x N champs, avec N champs de saisie et N champs informatifs associés,
   les N champs de saisie étant fonctionnellement identiques, de sorte qu'une donnée puisse être indifféremment saisie par l'internaute via l'un quelconque des N champs de saisie,
   et les N champs informatifs étant des champs préremplis par N informations qualifiantes respectives définies par le site, ces N informations qualifiantes étant différentes et n'étant pas corrélées aux données à
   saisir via les champs de saisie,
b) inviter l'internaute à saisir une donnée via l'un quelconque des N champs de saisie, librement sélectionné par l'internaute,
c) identifier celui des N champs de saisie sélectionné par l'internaute à l'étape b), et
d) faire remonter au site distant, par télétransmission, à la fois la donnée saisie par l'internaute et un indicateur représentatif de l'information qualifiante contenue dans le champ informatif correspondant au champ de saisie sélectionné par l'internaute.

Les champs de saisie peuvent être des champs cliquables, la donnée saisie à l'étape b) étant définie par la détection de l'action de l'internaute cliquant sur le champ de saisie sélectionné, ou bien des champs pouvant être renseignés par des caractères tapés par l'internaute sur un clavier, la donnée saisie à l'étape b) étant alors définie par le contenu du champ de saisie sélectionné et renseigné par l'internaute. Les N champs de saisie peuvent être disposés en regard de N champs informatifs, ou bien superposés à ce derniers.

Les informations qualifiantes peuvent être des données textuelles, incluant éventuellement un lien cliquable, et/ou des données graphiques.

Dans une variante avantageuse, le tableau affiché sur le terminal comprend un N+1^{e} champ informatif et un N+1^{e} champ de saisie associé, le N+1^{e} champ informatif étant sélectionnable par l'internaute et étant initialement dépourvu d'information qualifiante associée. Si, à l'étape b), l'internaute sélectionne le N+1^{e} champ informatif au lieu de saisir la donnée dans l'un quelconque des N autres champs de saisie, alors le site présente à l'internaute dans ce N+1^{e} champ informatif une N+1^{e} information qualifiante définie par le site, et autorise la saisie éventuelle de la donnée via le N+1^{e} champ de saisie. Les étapes d'affichage du N+1^{e} champ informatif et d'affichage de la N+1^{e} information qualifiante peuvent éventuellement être des étapes exécutables de manière itérative, avec à chaque itération affichage d'une information qualifiante différente de celles déjà présentées à l'internaute.

Dans une première forme de mise en oeuvre du procédé, à l'étape a) la page affichée comprend également un champ prérempli par une donnée, et à l'étape b) l'internaute est invité à recopier la donnée du champ prérempli en entrant celle-ci dans l'un quelconque des N champs de saisie. Cette situation est notamment applicable au cas où la donnée du champ prérempli est une donnée, définie par le site, d'un test de discrimination entre utilisateur humain et robot, ou bien un résultat issu d'un traitement opéré par le site distant, ce résultat étant transmis à l'internaute à l'issue d'une session du site avec ce dernier.

Dans une autre forme de mise en oeuvre du procédé, l'utilisateur introduit une donnée libre dans le champ de saisie.

Cette situation est notamment applicable au cas où le site distant est couplé à un moteur de recherche, la donnée à saisir par l'internaute étant une requête d'interrogation du moteur de recherche, ou bien dans le cas où la donnée à saisir par l'internaute est une donnée d'identification de cet internaute auprès du site distant. Il est également possible, lorsque le site distant est un moteur de recherche, de faire saisir à l'internaute une donnée retournée en réponse à une requête d'interrogation qu'il a soumise au moteur de recherche.

On va maintenant décrire un exemple de mise en oeuvre du procédé de l'invention, en référence aux dessins annexés où les mêmes références numériques désignent d'une figure à l'autre des éléments identiques ou fonctionnellement semblables.
La Figure 1 illustre la manière dont peut être mis en oeuvre le procédé de l'invention dans un premier exemple.
La Figure 2 illustre une variante du procédé décrit en relation avec la Figure 1.
La Figure 3 illustre une application du procédé de l'invention à la soumission d'une requête à un moteur de recherche.
La Figure 4 illustre une variante de nature graphique des champs présentés à l'internaute.
La figure 5 illustre encore une autre variante, également de nature graphique mais dans laquelle le geste demandé à l'internaute consiste seulement à cliquer sur une image qu'il aura choisie parmi plusieurs qui lui auront été présentées.

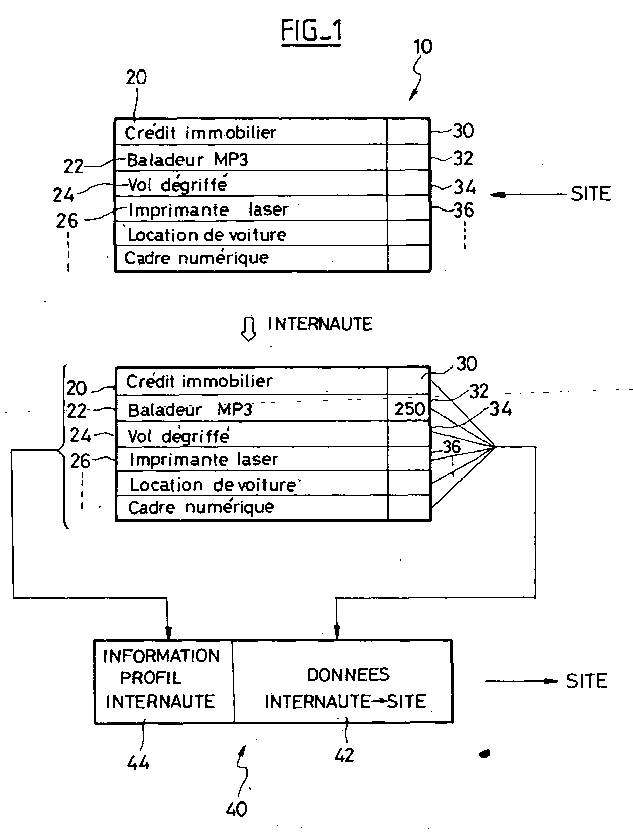

On décrira en référence à la Figure 1 la mise en oeuvre de l'invention dans un premier exemple, qui est celui d'un jeu en ligne.

Cet exemple n'est bien entendu aucunement limitatif, il ne sert qu'à illustrer l'invention, qui peut être appliquée à un très grand nombre de situations dans lesquelles un internaute est amené à consulter ou interroger un site web, à exécuter une transaction en ligne, etc.

Dans l'exemple du jeu en ligne, une fois la session de jeu achevée, le site affiche sur l'écran du terminal du joueur le nombre de points que celui-ci a gagnés, par exemple "250 points". Le site lui demande alors, s'il veut transformer ces points en un lot tel qu'une somme d'argent, un bon d'achat, etc. (ou encore si, au contraire, il veut poursuivre le jeu en misant à nouveau la somme gagnée), de recopier dans une case le montant ainsi affiché des points gagnés. En d'autres termes, le site demande à l'internaute-joueur, par un geste spécifique, d'exprimer sa volonté de transformer ses points en un lot, pour poursuivre la transaction entamée ave ce joueur. A cet effet, au lieu d'afficher au joueur une unique case de saisie dans laquelle il devra recopier la valeur "250", le site lui présente sur son terminal un tableau tel que celui illustré en 10 sur la Figure 1.

Ce tableau 10 comprend une pluralité de N champs 20, 22, 24 ... ci-après désignés "champs informatifs", avec en regard un même nombre N de cases ou champs correspondants 30, 32, 34 ..., initialement vides, ci-après désignés "champs de saisie".

Les champs informatifs 20, 22, 24 ... sont préremplis par le site par des informations, désignées "informations qualifiantes", relatives par exemple à des familles de produits commerciaux, des secteurs économiques, des messages d'annonceurs ou simplement des marques commerciales, que l'on veut confronter au regard de l'internaute. Dans l'exemple illustré, les informations qualifiantes sont : "crédit immobilier", "baladeur MP3", "vol dégriffé", "imprimante laser", etc.

Les champs de saisie 30, 32, 34 ..., quant à eux, sont des champs de type questionnaire dans lequel l'internaute a la faculté de saisir une donnée, tapée au clavier, après avoir sélectionné le champ, par exemple en cliquant dessus.

Le geste que le site demande à l'internaute d'effectuer consiste ainsi à placer le curseur sur l'un des champs de saisie 30, 32, 34 ..., et à y recopier le nombre de points qui lui aura été attribué et qui est affiché par ailleurs, c'est-à-dire le nombre "250" dans l'exemple donné plus haut.

Il s'agit pour l'internaute d'un geste qu'il fait à longueur de session lorsqu'il consulte un site Internet : placer le curseur à l'endroit approprié de l'écran et y taper des mots ou des chiffres. Dans le cas présent, le site demande ra seulement au joueur de choisir l'une des cases constituées par les champs de saisie 30, 32, 34 ..., pour y taper le nombre. Le joueur est totalement libre du choix de la case définissant le champ de saisie, pourvu qu'il s'agisse de l'un des N champs de saisie 30, 32, 34 ... du tableau qui lui est présenté. L'idée de base de l'invention réside dans le caractère "projectif" du geste de l'internaute, c'est-à-dire dans la constatation que, dans la plupart des cas, l'internaute choisira un champ de saisie situé face à un domaine économique, une marque, un produit, etc., qui l'intéresse plus qu'un autre. Ainsi, s'il n'est pas intéressé par les crédits immobiliers, il y a peu de chances qu'il choisisse le champ se trouvant en face de ce libellé ; inversement, s'il est amateur de voyages à bon compte, la probabilité qu'il choisisse le champ situé face à "vol dégriffé" est supérieure à celle du choix d'une autre case.

On notera que, pris individuellement, la corrélation entre le choix de la case et les préférences de l'internaute n'est pas très forte, elle peut même être parfois nulle si l'internaute clique au hasard.

Cette corrélation n'est cependant pas inférieure à celle rencontrée avec les questionnaires de type classique, qui sont plus souvent perçus de façon négative par les internautes. Dans le cas de l'invention, dans la mesure où le site ne demande pas à l'internaute plus que ce que qu'il lui aurait demandé pour le déroulement normal de la transaction, la perception est beaucoup moins négative, au pire indifférente. En effet, il est seulement demandé à l'internaute de cliquer sur une case et d'y taper une valeur numérique, c'est-à-dire rien de plus que dans le déroulement normal de la transaction. Ce geste ne sera donc pas perçu comme une perte de temps.

En tout état de cause, l'intérêt de l'invention est surtout de pouvoir obtenir des informations de nature statistique sur les internautes, et de dégager des grandes tendances sur une population de milliers ou de millions d'individus : regain d'intérêt pour certains produits ou services, ou au contraire désaffection saisonnière vis-à-vis d'autres secteurs. On notera que, même si certains internautes répondent au hasard, l'effet sera réparti identiquement sur toutes les réponses et ne viendra donc pas biaiser le résultat statistique final.

Par précaution, l'ordre dans lequel les différents libellés apparaissent dans le tableau peut être défini avec permutation ou de manière pseudo-aléatoire par le site, par exemple pour que le "crédit immobilier" n'apparaisse pas systématiquement en première position du tableau, ce qui pourrait introduire un certain biais dans les réponses fournies par les internautes. Après que l'internaute a recopié la valeur "250" dans l'une des cases (comme illustré sur le tableau du bas de la Figure 1), cette donnée est envoyée au site, sous la forme d'un message 40, comportant la donnée proprement dite 42 (c'est-à-dire la valeur objective destinée à être traitée dans le cadre de la session de jeu) associée à une information de profil 44 indiquant celui des champs informatifs 20, 22, 24 ..., en face duquel l'internaute a tapé la donnée (c'est-à-dire en d'autres termes, une information de nature subjective sur l'internaute).

Le tout est envoyé au site, qui pourra, d'une part, traiter la donnée du champ 42 (pour par exemple attribuer le lot à l'internaute-joueur), et d'autre part utiliser l'information de profil 44 à des fins statistiques.

On notera, et cette caractéristique est importante, que les N informations qualifiantes ne sont pas corrélées à l'information que le site demande à l'internaute de saisir dans les champs de saisie situés en regard. En d'autres termes, le contenu des champs informatifs est sans rapport avec la valeur que le site demande à l'internaute de recopier.

Une autre caractéristique essentielle de la présente invention est que les champs de saisie sont tous fonctionnellement identiques, c'est-à-dire que l'internaute pourra entrer la donnée dans l'un quelconque des champs de saisie, cette donnée sera traitée de façon strictement identique par le site. En d'autres termes, comme cela est illustré sur la Figure 1, quel que soit le champ de saisie 30, 32, 34 ... dans lequel est tapé la donnée ("250" dans l'exemple), cette dernière est toujours transmise identiquement au site, en 42 dans le message 40, concurremment avec l'information 44 sur le profil de l'internaute.

Si l'information de profil 44 est utilisée pour influer sur la transaction, cette opération interviendra dans une étape ultérieure, et dans le cadre d'une utilisation distincte et subsidiaire.

On notera par ailleurs que l'information que le site demande à l'internaute de saisir, à savoir un simple nombre ("250") dans l'exemple illustré, est totalement insusceptible de donner en elle-même la moindre information subjective sur l'internaute, à la différence par exemple des données envoyées aux sites de messagerie ou aux moteurs de recherche, données qui peuvent faire l'objet d'une analyse de contenu. On notera également que l'obtention des informations de profil (informations de nature subjective concernant les internautes) ne requiert que des ressources informatiques extrêmement minimes. Il s'agit seulement, au niveau du terminal, de déterminer celle des cases qui a été choisie par l'internaute, et d'adjoindre à la donnée envoyée au site une information constituée seulement de quelques bits d'information (un demi-octet permettant de coder jusqu'à seize champs de saisie différents).

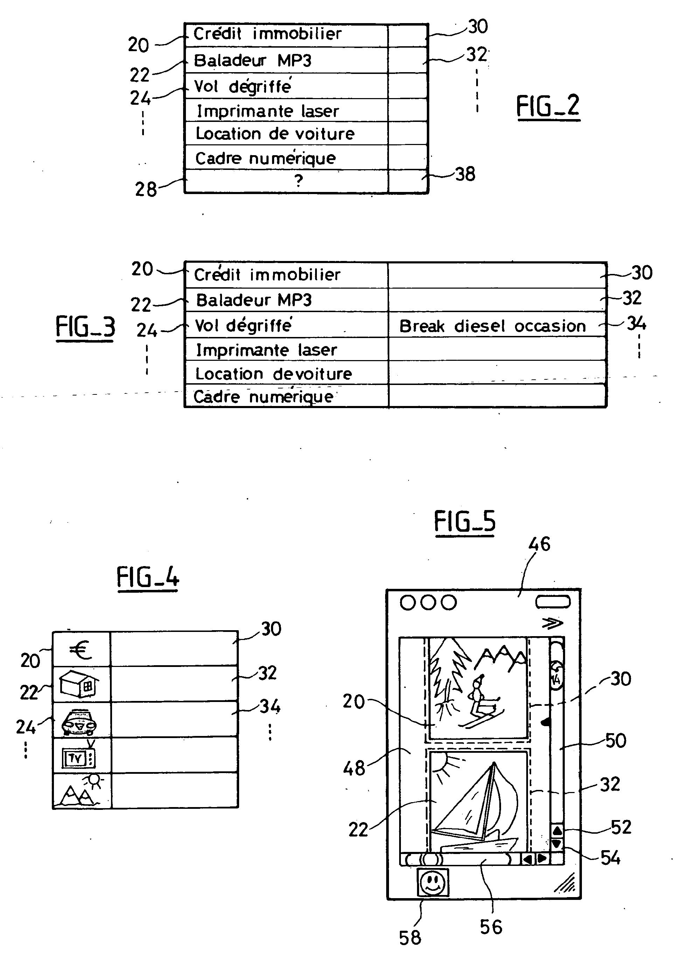

La Figure 2 illustre une variante du procédé consistant, outre les champs informatifs 20, 22, 24 ... préremplis par des informations, à proposer à l'internaute un champ informatif supplémentaire 28 avec un champ de saisie correspondant 38 en vis-à-vis.

Le champ 28 est initialement non rempli, si ce n'est l'affichage par exemple d'un point d'interrogation clignotant. Une autre caractéristique de ce champ 28 est d'être cliquable. En positionnant son curseur sur ce champ additionnel 28 et en cliquant dessus, le joueur engage le site à lui soumettre et à afficher un libellé additionnel (par exemple "assurance incendie"), puis encore un autre ("planche à voile") s'il réitère son geste, puis un autre encore, etc., ceci jusqu'à ce que le joueur choisisse l'un des champs de saisie 30, 32 ..., ou bien le champ de saisie additionnel 38, pour y taper la donnée à recopier "250" et poursuivre ensuite la transaction de la même manière qu'indiqué plus haut.

De très nombreuses variantes de mise en oeuvre du procédé de l'invention peuvent être envisagées.

Ainsi, l'exemple que l'on a décrit plus haut en référence aux Figures 1 et 2, dans lequel le site demande à l'internaute de recopier dans un champ de saisie une information affichée par ailleurs sur son écran, peut être avantageusement appliquée aux tests de type "Captcha" (marque déposée) de discrimination entre utilisateur humain et robot, où le site demande par exemple à l'utilisateur de lire des lettres ou des chiffres plus ou moins déformés ou brouillés (ou de répondre à des questions dont la réponse est évidente), et de recopier ces chiffres ou ces lettres dans une case de saisie.

Ici encore, il s'agit d'un geste que, en tout état de cause, l'internaute doit faire pour accéder au site : la mise en oeuvre du procédé de l'invention ne le perturbe donc en aucune façon. D'autre part les données que l'on demande à l'internaute de recopier sont en elles-mêmes totalement dépourvues de signification. La technique de l'invention permet ainsi, dès l'accès au site (puisque ces tests sont en général préalables à la consultation du site) d'obtenir déjà une information personnelle sur le profil de l'internaute, et/ou des informations de nature plus statistique sur la population d'internautes se connectant au site à une période donnée.

Dans une autre variante encore, la technique de l'invention peut être utilisée pour sensibiliser l'internaute au service rendu par un moteur de recherche.

En effet, les moteurs de recherche, dont l'accès pour le grand public est gratuit, mettent en oeuvre des moyens informatiques considérables, dont la plupart des internautes n'ont pas conscience.

Ces moteurs de recherche ont la capacité d'indexer le contenu de plusieurs milliards de pages accessibles à la consultation sur toutes sortes de sites Internet, et d'offrir en l'espace d'une fraction de seconde une réponse à une question posée en fournissant un nombre souvent impressionnant de références contenant les mots qui constituent la demande. Ces références sont présentées par le moteur de recherche sur des écrans successifs, en affichant sur chaque écran un nombre donné de résultats, par exemple 10 ou 20 résultats par écran. Pour passer d'un écran au suivant, il suffit à l'internaute de cliquer sur un champ "suivant" au bas de l'écran.

En réponse à la requête de l'internaute, le moteur de recherche fournit, outre la liste des références trouvées, une valeur numérique généralement intitulée "Résultats", représentative des occurrences ("hits") de pages Internet contenant le ou les mots de la requête parmi l'ensemble des pages indexées par le moteur.

Cette information est souvent ignorée par nombre d'internautes, qui cherchent seulement des références de sites. Elle reflète cependant, sous une forme très condensée, la richesse de l'algorithme mis en oeuvre par le moteur de recherche.

Si, par exemple, l'internaute tape dans le champ de recherche du moteur le mot "pollution", celui-ci va répondre, classiquement, en présentant un premier écran de résultats listant les dix premiers (par exemple) sites, cette liste étant précédée d'un titre tel que "Résultats 1-10 sur un total d'environ 49 800 000 pour *pollution* (0,24 seconde)".

L'invention peut être appliquée à ce stade en demandant à l'internaute de recopier le nombre de références trouvées ("49 800 000"), ou bien le temps d'exécution de la recherche ("0,24") dans l'un des champs de saisie d'une grille telle que celle décrite plus haut en référence aux Figures 1 et 2, pour pouvoir poursuivre la visualisation des résultats donnés par le moteur de recherche en réponse à sa requête, par exemple pour pouvoir accéder à l'écran de résultats suivant.

L'avantage est double : non seulement le moteur de recherche peut disposer d'informations de nature subjective sur l'internaute (d'après le choix de la case de saisie, comme exposé plus haut), mais également il aura sensibilisé ce dernier au service rendu par le moteur de recherche.

Dans d'autres variantes encore, le champ de saisie n'est pas un champ dans lequel le site impose à l'internaute de recopier une information prédéfinie, mais un champ de saisie libre.

Une application particulièrement avantageuse est celle des moteurs de recherche, comme dans le cas du tableau 10 illustré Figure 3.

En face des N champs informatifs 20, 22, 24 ..., qui contiennent le même type d'informations qualifiantes que dans les exemples précédents, le site présente à l'internaute N champs de saisie 30, 32, 34, ..., pour y taper sa requête. L'utilisateur doit choisir l'un des champs de saisie pour y taper sa requête, avec une liberté totale du choix, dès lors que ce choix s'exerce dans le cadre fermé des N champs de saisie qui lui sont proposés.

On notera que les N informations qualifiantes ne sont pas corrélées à la requête formulée par l'internaute. S'il se trouve, par hasard, que celui-ci souhaite obtenir des informations sur des crédits immobiliers, il pourra très bien taper sa requête dans le champ de saisie situé face à "baladeur MP3", et ne pas choisir celui situé en face de "crédit immobilier", sans que le traitement de sa requête par le moteur de recherche n'en soit affecté d'aucune manière.

Une technique comparable peut être utilisée lorsque, au moment de l'accès à un site, celui-ci demande à l'internaute de taper son identifiant (*login*) et/ou son mot de passe : au lieu de lui proposer un seul champ pour y taper cette donnée, comme cela se fait actuellement, le site lui propose, selon l'invention, une pluralité de champs de saisie, au choix, disposés en regard d'un nombre identique de champs informatifs préremplis par des informations qualifiantes.

La Figure 4 illustre encore une autre variante, dans laquelle les champs informatifs 20, 22, 24 ... sont préremplis par des données graphiques (une maison, une voiture, un paysage de vacances, ...). Le choix du champ de saisie 30, 32, 34 ... que l'internaute utilisera pour saisir la donnée peut donner une indication sur ses préférences, ses centres d'intérêt, etc.

Dans une autre variante encore, non illustrée, les champs informatifs sont préremplis par des données (textuelles ou graphiques) contenant des liens cliquables, permettant à l'internaute qui le souhaite d'abandonner provisoirement le déroulement de la transaction pour obtenir plus d'informations sur le sujet qui l'intéresse, par exemple par ouverture d'une fenêtre supplémentaire dans son navigateur web.

La Figure 5 illustre une autre variante, encore de nature graphique, avec une plus grande interactivité, exploitant la base de gestes et de réflexes auxquels l'informatique a pu habituer les utilisateurs depuis près de vingt-cinq ans avec la généralisation des interfaces graphiques.

Dans cette mise en oeuvre particulière, l'exploitant du site dispose sur l'écran affiché à l'internaute d'une fenêtre 46 laissant apparaître une partie d'une surface active 48 de plus grande dimension, que l'internaute pourra parcourir au moyen des barres de défilement habituelles, par exemple la barre de défilement verticale 50 avec son bouton "ascenseur" et des flèches de défilement vers le haut 52 et vers le bas 54. Un défilement horizontal peut également être prévu au moyen d'une barre horizontale comparable 56.

En jouant sur les flèches de défilement, l'internaute pourra faire apparaître divers champs informatifs 20, 22, ..., par exemple une image de sports d'hiver, un voilier, une plage tropicale, un paysage de campagne, etc. si l'exploitant du site veut analyser les goûts de l'internaute en matière de vacances. Des champs cliquables 30, 32, ... sont superposés à ces champs informatifs 20, 22 ... de sorte que le geste demandé à l'internaute consistera à cliquer sur l'une des images qui lui sont présentées et qu'il aura pu faire défiler à sa guise.

Plus précisément, l'internaute peut se conduire de trois façons différentes face à l'affichage d'une telle fenêtre 46 :
- indifférence complète : il ne regarde pas, éventuellement ne voit même pas cette fenêtre ;
- interaction avec la fenêtre en cliquant une ou plusieurs fois sur les flèches de défilement, mais sans prêter plus attention aux images qui défilent ;
- défilement des différents clichés et sélection de l'un d'entre eux, par exemple en cliquant sur le champ 30 superposé au paysage de sports d'hiver 20. Ce geste peut être également matérialisé par un clic sur un bouton particulier 58, ou encore par appui sur la touche "entrée" du clavier, après avoir positionné l'image choisie au centre de la fenêtre qui lui est proposée.

Ce geste de l'internaute, quelle que soit sa forme, lui permettra d'obtenir l'un des divers avantages évoqués plus haut : crédit d'un nombre de points, accès à un site, etc. En contrepartie, le site aura recueilli une information personnelle sur le profil de l'internaute, et/ou des informations de nature plus statistique sur la population d'internautes se connectant au site à une période donnée.

## Revendications

1. Un procédé de recueil d'informations relatives à un internaute connecté à un site distant au moyen d'un terminal relié à ce site par des moyens bidirectionnels de télétransmission de données, **caractérisé par** les étapes successives suivantes :
a) afficher sur le terminal une page présentant à l'internaute un tableau (10) de 2 x N champs, avec N champs de saisie (30, 32, 34 ...) et N champs informatifs (20, 22, 24 ...) associés,
les N champs de saisie étant fonctionnellement identiques, de sorte qu'une donnée puisse être indifféremment saisie par l'internaute via l'un quelconque des N champs de saisie,
et les N champs informatifs étant des champs préremplis par N informations qualifiantes respectives définies par le site, ces N informations qualifiantes étant différentes et n'étant pas corrélées aux données à
saisir via les champs de saisie,
b) inviter l'internaute à saisir une donnée via l'un quelconque des N champs de saisie, librement sélectionné par l'internaute,
c) identifier celui des N champs de saisie sélectionné par l'internaute à l'étape b), et
d) faire remonter au site distant, par télétransmission, à la fois :
· la donnée saisie par l'internaute et
· un indicateur (44) représentatif de l'information qualifiante contenue dans le champ informatif correspondant au champ de saisie sélectionné par l'intérnaute.

2. Le procédé de la revendication 1, dans lequel les champs de saisie sont des champs cliquables, la donnée saisie à l'étape b) étant définie par la détection de l'action de l'internaute cliquant sur le champ de saisie sélectionné.

3. Le procédé de la revendication 1, dans lequel les champs de saisie sont des champs pouvant être renseignés par des caractères tapés par l'internaute sur un clavier, la donnée saisie à l'étape b) étant définie par le contenu (42) du champ de saisie sélectionné et renseigné par l'internaute.

4. Le procédé de la revendication 1, dans lequel les N champs de saisie sont disposés en regard de N champs informatifs.

5. Le procédé de la revendication 1, dans lequel les N champs de saisie sont superposés aux N champs informatifs.

6. Le procédé de la revendication 1, dans lequel les informations qualifiantes sont des données textuelles.

7. Le procédé de la revendication 6, dans lequel les données textuelles des informations qualifiantes incluent un lien cliquable.

8. Le procédé de la revendication 1, dans lequel les informations qualifiantes sont des données graphiques.

9. Le procédé de la revendication 1, dans lequel :
- le tableau (10) affiché sur le terminal comprend un N+1^{e} champ informatif (28) et un N+1^{e} champ de saisie (38) associé, le N+1^{e} champ informatif étant sélectionnable par l'internaute et étant initialement dépourvu d'information qualifiante associée, et
- si, à l'étape b), l'internaute sélectionne le N+1^{e} champ informatif au lieu de saisir la donnée via l'un quelconque des N autres champs de saisie, alors présenter à l'internaute dans ce N+1^{e} champ informatif une N+1^{e} information qualifiante définie par le site, et autoriser la saisie éventuelle de la donnée via ledit N+1^{e} champ de saisie.

10. Le procédé de la revendication 9, dans lequel les étapes d'affichage d'un N+1^{e} champ informatif sélectionnable et d'affichage d'une N+1^{e} information qualifiante sont des étapes exécutables de manière itérative, avec à chaque itération affichage d'une information qualifiante différente de celles déjà présentées à l'internaute.

11. Le procédé de la revendication 3, dans lequel :
- à l'étape a) la page affichée comprend également un champ prérempli par une donnée, et
- à l'étape b) l'internaute est invité à recopier ladite donnée du champ prérempli en saisissant celle-ci dans l'un quelconque des N champs de saisie (30, 32, 34 ...).

12. Le procédé de la revendication 11, dans lequel ladite donnée du champ prérempli est une donnée, définie par le site, d'un test de discrimination entre utilisateur humain et robot.

13. Le procédé de la revendication 11, dans lequel ladite donnée du champ prérempli est un résultat issu d'un traitement opéré par le site distant, ce résultat étant transmis à l'internaute à l'issue d'une session du site avec ce dernier.

14. Le procédé de la revendication 1, dans lequel :
- le site distant est couplé à un moteur de recherche, et
- la donnée à saisir par l'internaute est une requête d'interrogation du moteur de recherche.

15. Le procédé de la revendication 1, dans lequel :
- le site distant est un moteur de recherche, et
- la donnée à saisir par l'internaute est une donnée retournée en réponse à une requête d'interrogation soumise par l'internaute au moteur de recherche.

16. Le procédé de la revendication 1, dans lequel la donnée à saisir par l'internaute est une donnée d'identification de cet internaute auprès du site distant.
